# EUROPEAN PATENT APPLICATION

(11) **EP 4 717 466 A1**
(43) Date of publication of application: **01.04.2026**
(21) Application number: 25204850.9
(22) Date of filing: 26.09.2025
(51) Int. Cl.: B60B 3/04, B60B 21/02

(54) **VEHICLE WHEEL RIM**

(30) Priority: 30.09.2024 IT 202400021585
(71) Applicant: MW Italia S.r.l., 10098 Rivoli (TO) (IT)
(72) Inventor: RONCO, Davide, I-14019 VILLANOVA D'ASTI (Asti) (IT); RADELCZUK, Szymon, 22-100 CHELM (PL); SINISI, Marika, I-76123 ANDRIA (Barletta-Andria-Trani) (IT); GALLIO, Giorgio, I-10090 ROSTA (Torino) (IT); ZANOLLI, Emanuele, I-10144 TORINO (IT); GOTTA, Giacomo, I-10081 CASTELLAMONTE (Torino) (IT)
(74) Representative: Vanzini, Christian

(57) **Abstract**

Metal sheet rim for vehicle wheel, comprising a transition section (24) adjacent to an inner well flank (25b) and to an inner retaining hump (23) between the transition section (24) and an inner rim shoulder (22), the inner retaining hump (23) being rotationally symmetrical with respect to the axis of the wheel. The transition section (24) comprises at least one stiffening formation (31; 131; 231; 331; 431; 531; 631) arranged on the transition section (24), the stiffening formation being, on a first radial side of the rim, radially protruding with respect to an adjacent area of the transition section (24) and, on a second radial side of the rim, radially recessed with respect to the adjacent area of the transition section (24). The stiffening formation has a wall thickness substantially equal to the wall thickness of the adjacent area of the transition section, such that the transition section (24) has a radial sectional profile that varies along the circumferential direction of the wheel.

## Description

The present invention relates to a vehicle wheel rim, wherein the rim is made of metal sheet and comprises an inner rim flange, an outer rim flange, an inner rim shoulder, an outer rim shoulder, and a rim well that includes a well base, an inner well flank, and an outer well flank and is interposed between the rim shoulders, wherein the rim has a transition section adjacent to the inner well flank and an inner retaining hump between the transition section and the inner rim shoulder, said inner retaining hump being rotationally symmetrical with respect to the wheel axis.

An object of the present invention is to make available a solution that allows reducing the noise of the wheel, while increasing the dynamic and static stiffness thereof (the ability of the wheel, when subjected to a load, to resist deformations).

Said object is achieved according to the invention by a wheel of the type defined above, wherein the transition section comprises at least one stiffening formation arranged on the transition section, said at least one stiffening formation being, on a first radial side of the rim, radially protruding with respect to an adjacent area of the transition section and, on a second radial side of the rim opposite to the first radial side, radially recessed with respect to the adjacent area of the transition section, said at least one stiffening formation having a wall thickness substantially equal to the wall thickness of the adjacent area of the transition section, so that the transition section has a radial sectional profile that varies along the circumferential direction of the wheel, said radial profile being non-constant over the 360° of revolution of the transition section around the wheel axis, and said transition section having a non-circular profile according to a cross-sectional view, orthogonal to the wheel axis.

The presence of the stiffening formation(s) that alters/alter the otherwise circular cross profile of the transition section makes it possible to increase the dynamic and static stiffness of the wheel, furthermore reducing the noise thereof. As is known, the noise associated with the cavity of the tyre (air born noise) is due to the movement of the air inside the chamber of the tyre. The air moves (clockwise and counterclockwise) generating noise. The presence of said formation(s) can modify the flow of the air, damping the noise.

Preferred embodiments of the invention are defined in the dependent claims, which are to be considered as an integral part of the present description.

Features and advantages of the rim according to the invention will become clearer with the following detailed description of some embodiments of the invention, made with reference to the accompanying drawings, provided purely by way of illustration and not limitation, in which:
- Figure 1 is a perspective view of a first wheel according to the invention;
- Figure 2 is a cross-sectional view of a part of the wheel of figure 1, taken along line II-II of figure 3;
- Figure 3 is a radial sectional view of the wheel of figure 1;
- Figure 4 is a perspective view of a second wheel according to the invention;
- Figure 5 is a cross-sectional view of a part of the wheel of figure 4, taken along line V-V of figure 6;
- Figures 6 and 7 are radial sectional views of the wheel of figure 4;
- Figures 8 and 9 are radial sectional views of portions of the rim according to a variant of the wheel of figure 4;
- Figure 10 is a radial sectional view of a portion of the rim according to a further variant of the wheel of figure 4;
- Figure 11 is a perspective view of a third wheel according to the invention;
- Figure 12 is a cross-sectional view of a part of the wheel of figure 11, taken along line XII-XII of figure 13;
- Figures 13 and 14 are radial sectional views of the wheel of figure 11;
- Figure 15 is a perspective view of a fourth wheel according to the invention;
- Figure 16 is a cross-sectional view of a part of the wheel of figure 15, taken along line XVI-XVI of figure 17;
- Figure 17 is a radial sectional view of the wheel of figure 15;
- Figure 18 is a perspective view of a fifth wheel according to the invention
- Figure 19 is a radial sectional view of the wheel of figure 18;
- Figure 20 is a perspective view of a sixth wheel according to the invention;
- Figure 21 is a cross-sectional view of a part of the wheel of figure 20, taken along line XXI-XXI of figure 22;
- Figure 22 is a radial sectional view of the wheel of figure 20;
- Figure 23 is a perspective view of a seventh wheel according to the invention;
- Figures 24 and 25 are cross-sectional views of parts of the wheel of figure 23, respectively taken along line XXIV-XXIV of figure 26 and along line XXV-XXV of figure 23;
- Figures 26 and 27 are radial sectional views of the wheel of figure 23;
- Figure 28 is a perspective view of an eighth wheel according to the invention;
- Figure 29 is a cross-sectional view of a part of the wheel of figure 28, taken along line XXIX-XXIX of figure 30;
- Figures 30 and 31 are radial sectional views of the wheel of figure 28;
- Figure 32 is a perspective view of a ninth wheel according to the invention;
- Figures 33 and 34 are radial sectional views of the wheel of figure 32;
- Figure 35 is a perspective view of a tenth wheel according to the invention;
- Figures 36 and 37 are radial sectional views of the wheel of figure 35.

In the following description, by axial direction is meant a direction parallel to the axis of the wheel. The indications "inner" and "outer", with respect to the axial direction, are referred to the condition of installation of the wheel on the vehicle, wherein "inner" indicates "towards the vehicle" and "outer" indicates "away from the vehicle".

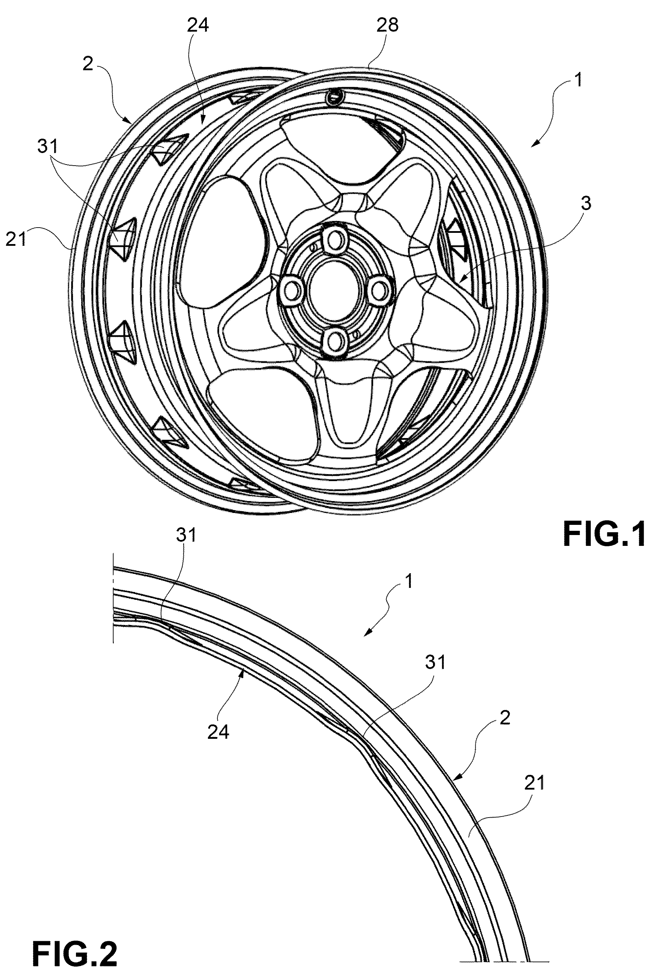

In figures 1 to 3, number 1 overall denotes a vehicle wheel according to the invention.

The wheel 1 comprises a rim 2 made of metal sheet, for example of steel or aluminium and made for example by rolling and welding, and a disc 3 made of metal sheet, for example of steel or aluminium and made for example by stamping and shearing.

The rim 2 conventionally comprises, in succession along the axial direction from the inside towards the outside and joined to one another, an inner rim flange 21, an inner rim shoulder 22, an inner retaining hump 23, a transition section 24, a rim well 25, an outer retaining hump 26, an outer rim shoulder 27, and an outer rim flange 28. The rim well 25 comprises a well base 25a, an inner well flank 25b, and an outer well flank 25c. The transition section 24 is adjacent to the inner well flank 25b and to the inner retaining hump 23. With the exception of the transition section 24, the above-described parts of the rim are rotationally symmetrical, that is, they have the symmetry of a surface of revolution around the axis of the wheel.

The disc 3 is of the spoked type and is fixed to a radially inner surface of the rim (in particular at the well base 25a), for example by welding. Conventionally, the disc 3 comprises a central mounting portion provided for connection by means of bolts to an axle hub, and a peripheral connection portion provided for being fixed to the rim.

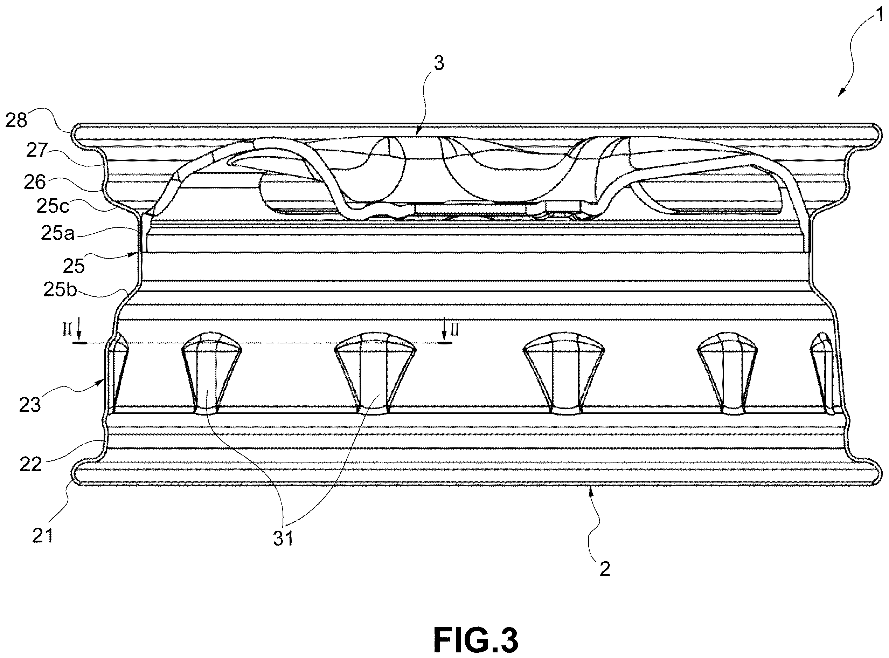

In the example of figures 1-3, the transition section 24 comprises a plurality of stiffening formations 31 regularly distributed on the transition section 24, in particular angularly equidistant along the circumferential direction of the transition section 24. The stiffening formations 31 are obtained by plastic deformation processing. In the example of figures 1-3, the stiffening formations 31 are shell-shaped bulges, which, on the radially outer side of the rim, protrude radially outwards with respect to an adjacent area of the transition section 24. On the radially inner side of the rim, such stiffening formations 31 are radially recessed with respect to the adjacent area of the transition section 24. Said stiffening formations 31 have a wall thickness substantially equal to the wall thickness of the adjacent area of the transition section 24. In this way, it is obtained that the transition section 24 (which in the absence of the stiffening formations 31 would be rotationally symmetrical) has a radial sectional profile that varies along the circumferential direction of the wheel, as can be noted in particular in figure 3. In the example of figures 1-3, furthermore, the stiffening formations 31 extend in the axial direction up to one side of the inner retaining hump 23.

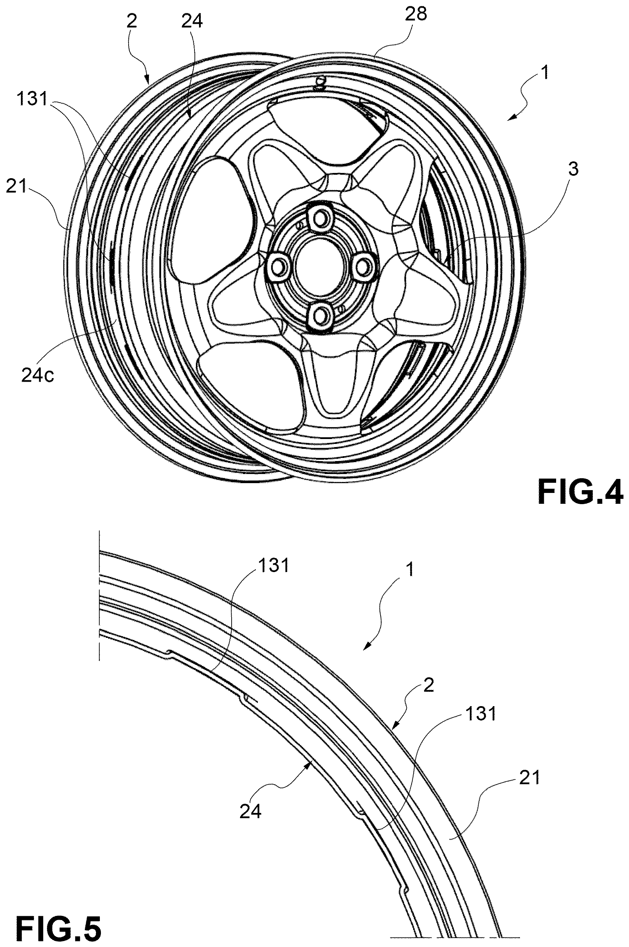

In figures 4 to 7 a second vehicle wheel according to the invention is shown. To elements corresponding to those of the previous embodiment the same reference numerals have been assigned. Such elements will not be further described.

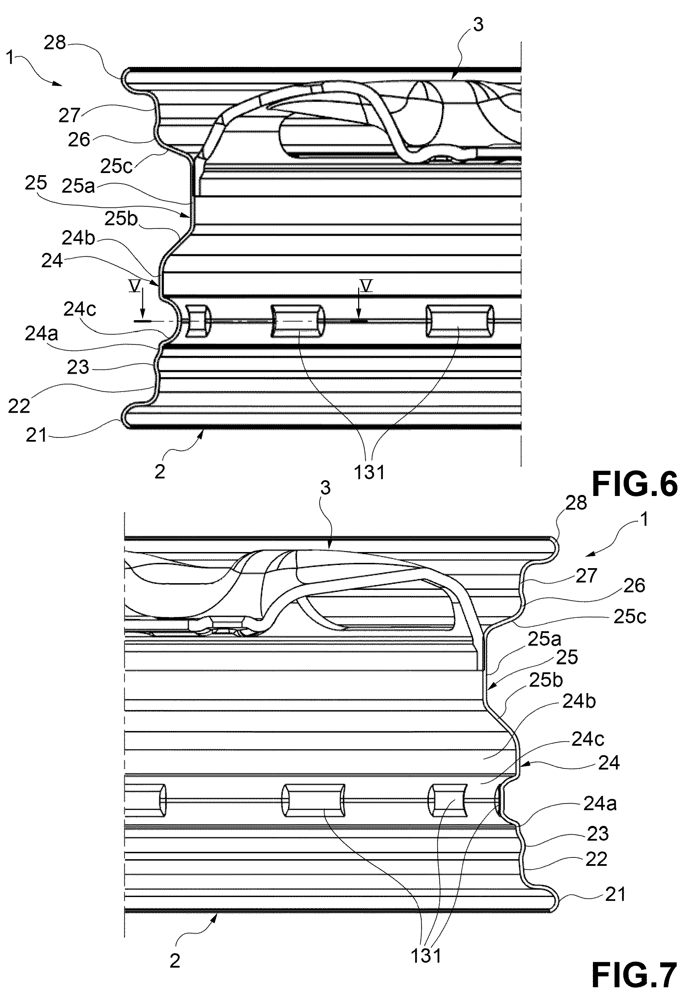

In the example of figures 4-7, the transition section 24 comprises an inner section 24a and an outer section 24b, between which a groove 24c is interposed, said groove being radially recessed with respect to the inner section 24a and the outer section 24b. The sections 24a and 24b and the groove 24c are rotationally symmetrical with respect to the axis of the wheel. Inside the groove 24c a plurality of stiffening formations 131 is obtained, regularly distributed on the transition section 24, in particular angularly equidistant along the circumferential direction of the transition section 24. The stiffening formations 131 are obtained by plastic deformation processing. In the example of figures 4-7, the stiffening formations 131 are rectangular-shaped bulges, which, on the radially outer side of the rim, protrude radially outwards with respect to an adjacent area of the transition section 24 (more precisely, of the groove 24c). On the radially inner side of the rim, such stiffening formations 131 are radially recessed with respect to the adjacent area of the transition section 24. Said stiffening formations 131 have a wall thickness substantially equal to the wall thickness of the adjacent area of the transition section 24. In this way, it is obtained that the transition section 24 has a radial sectional profile that varies along the circumferential direction of the wheel, as can be noted in particular in figures 6 and 7.

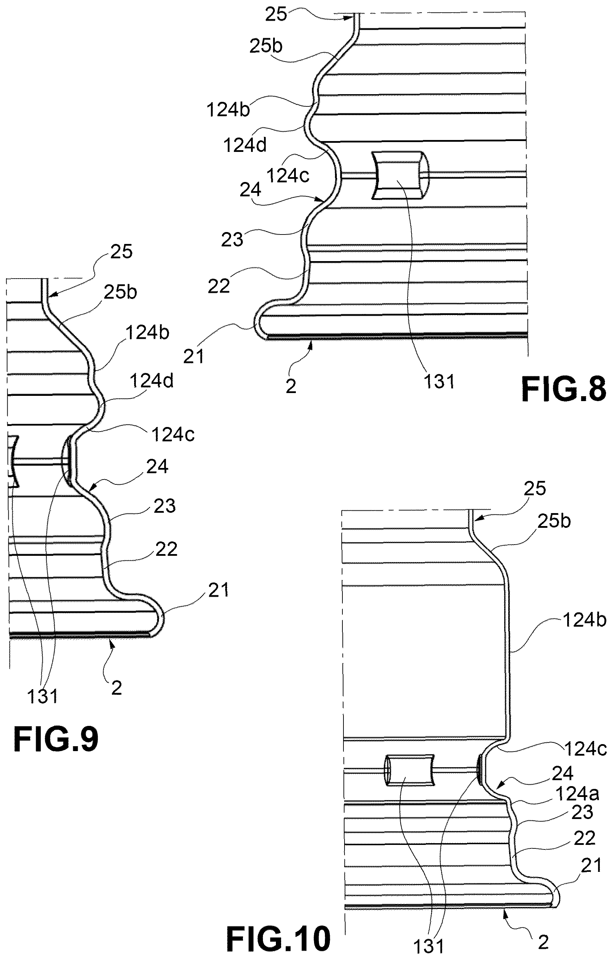

In figures 8 and 9 a variant of the wheel of figures 4-7 is shown, wherein the rim 2 has a different radial profile at the transition section 24.

In particular, the transition section 24 comprises an outer section 124b adjacent to which a rib 124d is radially protruding outwards with respect to the outer section 124b. A groove 124a radially recessed with respect to the outer section 124b is interposed between the rib 124d and the inner retaining hump 23, and adjacent thereto. The section 124b, the rib 124d, and the groove 124c are rotationally symmetrical with respect to the axis of the wheel. Inside the groove 124c a plurality of stiffening formations 131 is obtained as in the previous example.

In figure 10 a further variant of the wheel of figures 4-7 is shown, wherein the rim 2 has a different radial profile at the transition section 24. In particular, the outer section 24b of the transition section 24 has an axial extension greater than in the example of figures 4-7.

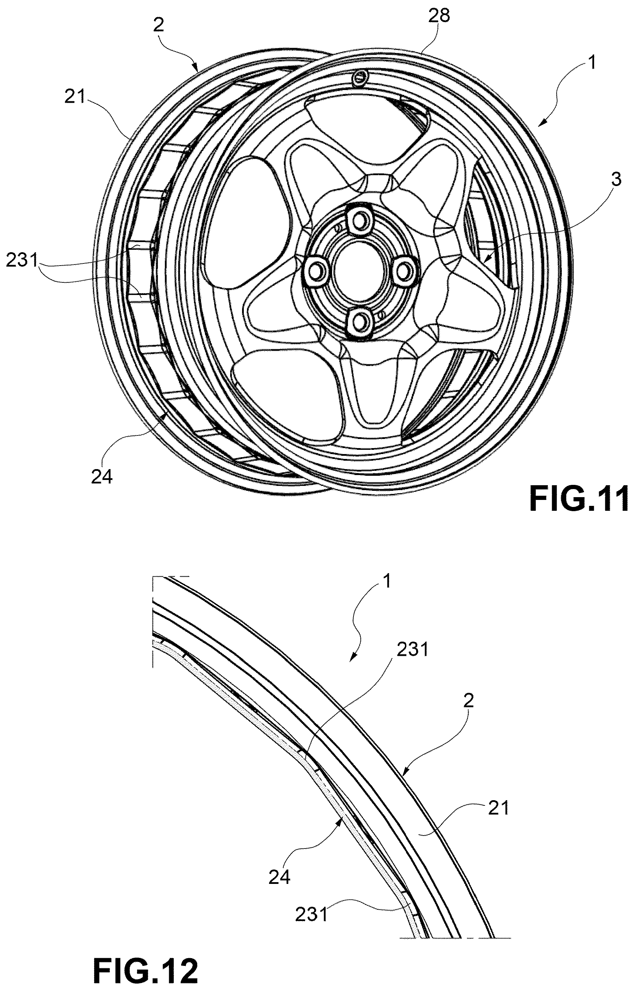

In figures 11 to 14 a third vehicle wheel according to the invention is shown. To elements corresponding to those of the previous embodiments the same reference numerals have been assigned. Such elements will not be further described.

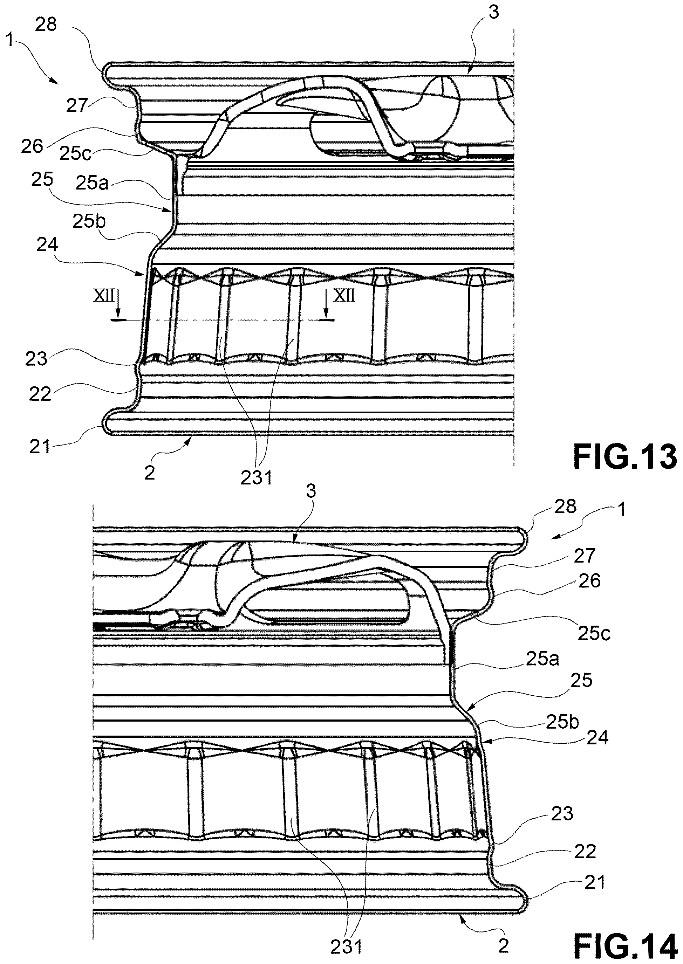

In the example of figures 11-14, the transition section 24 comprises a plurality of stiffening formations 231 regularly distributed on the transition section 24, in particular angularly equidistant along the circumferential direction of the transition section 24. The stiffening formations 231 are obtained by plastic deformation processing. In the example of figures 11-14, the stiffening formations 231 extend axially along a band of the transition section 24 and are connected to one another so as to define a polygonal profile in cross section, orthogonal to the axis of the wheel (see in particular figure 12), arranged around the axis of the wheel. On the radially outer side of the rim, the stiffening formations 231 protrude radially outwards with respect to an adjacent area of the transition section 24. On the radially inner side of the rim, such stiffening formations 231 are radially recessed with respect to the adjacent area of the transition section 24. Said stiffening formations 231 have a wall thickness substantially equal to the wall thickness of the adjacent area of the transition section 24. In this way, it is obtained that the transition section 24 has a radial sectional profile that varies along the circumferential direction of the wheel, as can be noted in particular in figures 13 and 14.

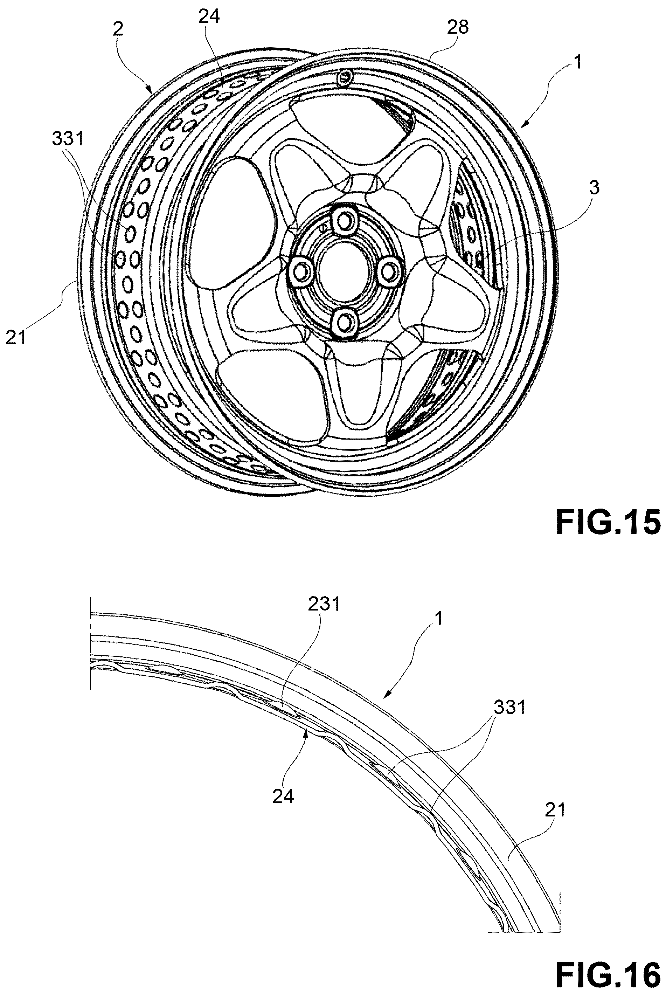

In figures 15 to 17 a fourth vehicle wheel according to the invention is shown. To elements corresponding to those of the previous embodiments the same reference numerals have been assigned. Such elements will not be further described.

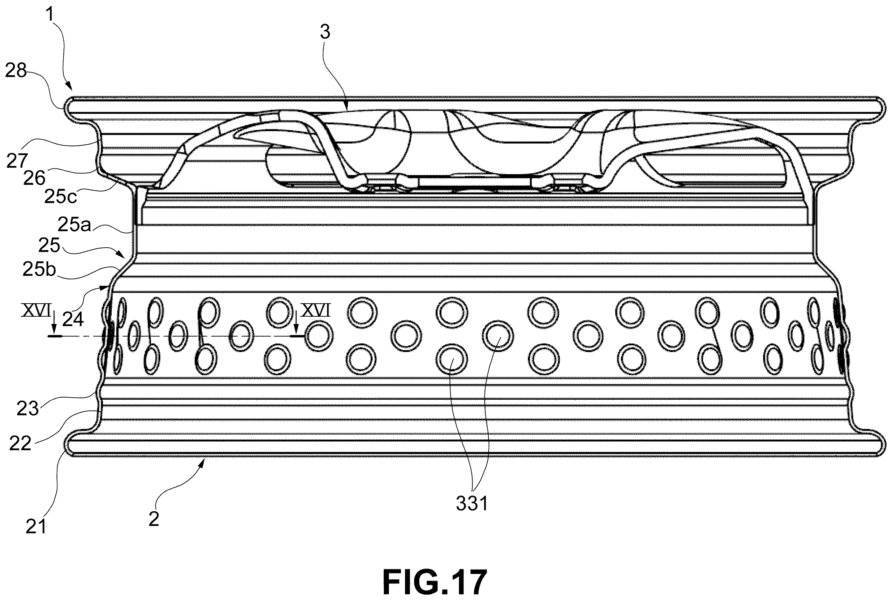

In the example of figures 15-17, the transition section 24 comprises a plurality of stiffening formations 331 regularly distributed on the transition section 24, in particular angularly equidistant along the circumferential direction of the transition section 24. The stiffening formations 331 are obtained by plastic deformation processing. In the example of figures 15-17, the stiffening formations 331 are in the form of circular bulges which, on the radially outer side of the rim, protrude radially outwards with respect to an adjacent area of the transition section 24. On the radially inner side of the rim, such stiffening formations 331 are radially recessed with respect to the adjacent area of the transition section 24. Said stiffening formations 331 have a wall thickness substantially equal to the wall thickness of the adjacent area of the transition section 24. The formations are distributed in a plurality of parallel rows extending along the circumferential direction of the transition section 24. The positions of the stiffening formations 331 along each row are angularly offset with respect to the positions of the stiffening formations 331 along the adjacent row(s). In this way, it is obtained that the transition section 24 (which in the absence of the stiffening formations 331 would be rotationally symmetrical with respect to the axis of the wheel) has a radial sectional profile that varies along the circumferential direction of the wheel, as can be noted in particular in figure 17.

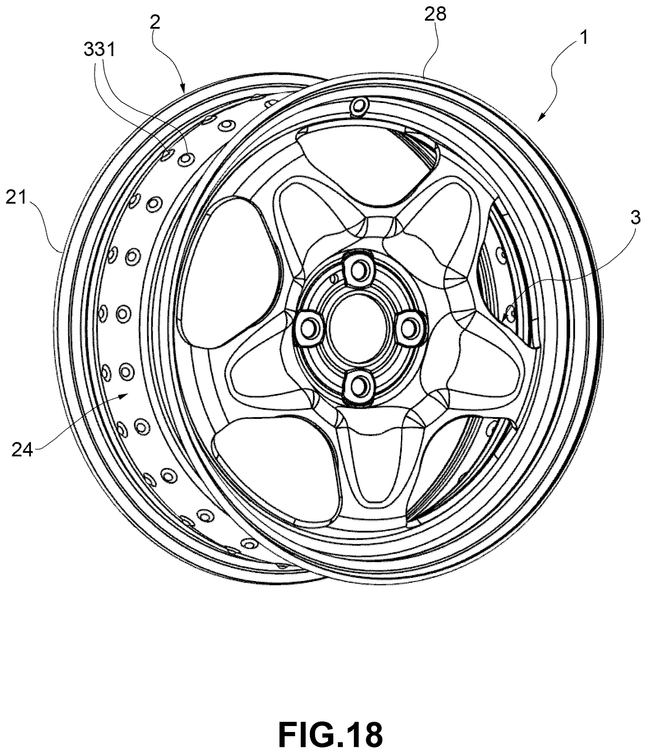

In figures 18 to 19 a fifth vehicle wheel according to the invention is shown. To elements corresponding to those of the previous embodiments the same reference numerals have been assigned. Such elements will not be further described.

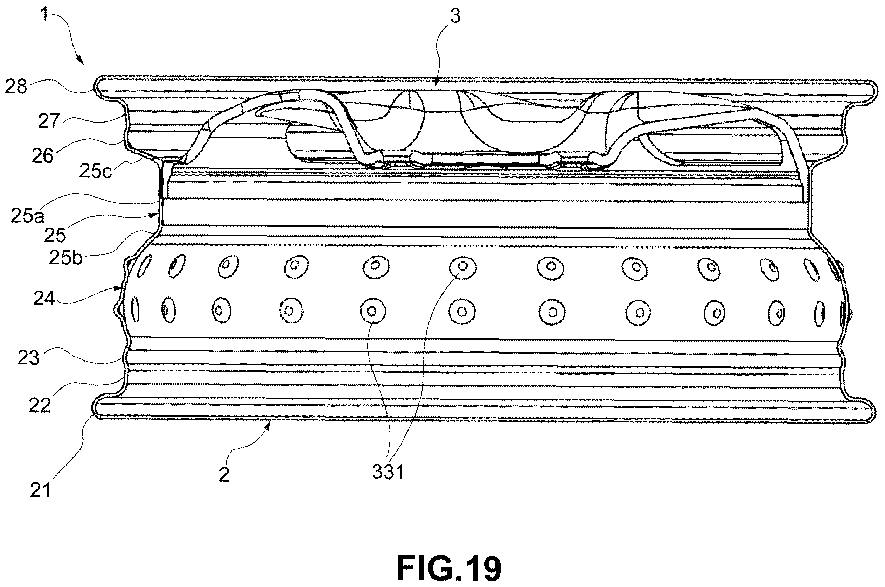

In the example of figures 18-19, the transition section 24 comprises a plurality of stiffening formations 331 as those described in the example of figures 15-17. The formations are distributed in a plurality of parallel rows extending along the circumferential direction of the transition section 24. The positions of the stiffening formations 331 along each row are angularly aligned with the positions of the stiffening formations 331 along the adjacent row(s). In this way, it is obtained that the transition section 24 (which in the absence of the stiffening formations 331 would be rotationally symmetrical with respect to the axis of the wheel) has a radial sectional profile that varies along the circumferential direction of the wheel, as can be noted in particular in figure 19.

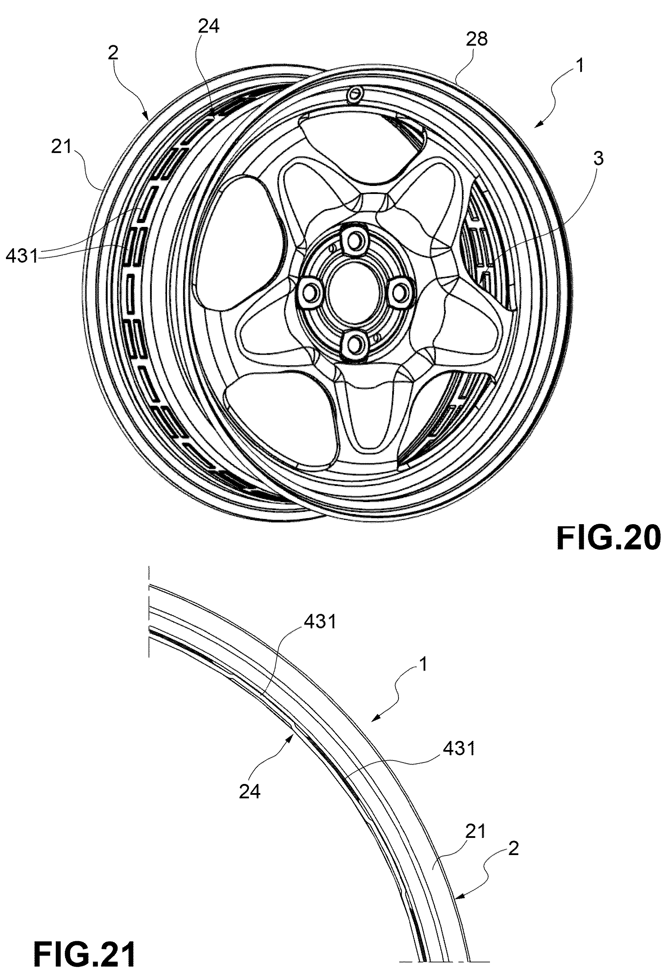

In figures 20 to 22 a sixth vehicle wheel according to the invention is shown. To elements corresponding to those of the previous embodiments the same reference numerals have been assigned. Such elements will not be further described.

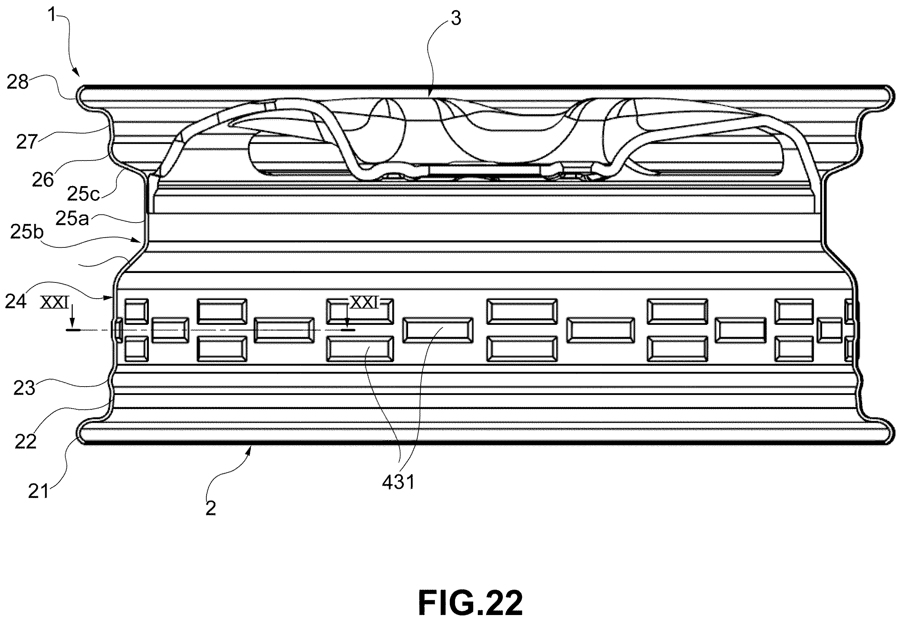

In the example of figures 20-22, the transition section 24 comprises a plurality of stiffening formations 431 regularly distributed on the transition section 24, in particular angularly equidistant along the circumferential direction of the transition section 24. The stiffening formations 431 are obtained by plastic deformation processing. In the example of figures 20-22, the stiffening formations 431 are in the form of rectangular bulges which, on the radially outer side of the rim, protrude radially outwards with respect to an adjacent area of the transition section 24. On the radially inner side of the rim, such stiffening formations 431 are radially recessed with respect to the adjacent area of the transition section 24. Said stiffening formations 431 have a wall thickness substantially equal to the wall thickness of the adjacent area of the transition section 24. The stiffening formations 431 are distributed in a plurality of parallel rows extending along the circumferential direction of the transition section 24. The positions of the stiffening formations 431 along each row are angularly offset with respect to the positions of the stiffening formations 431 along the adjacent row(s). In this way, it is obtained that the transition section 24 (which in the absence of the stiffening formations 431 would be rotationally symmetrical with respect to the axis of the wheel) has a radial sectional profile that varies along the circumferential direction of the wheel, as can be noted in particular in figure 22.

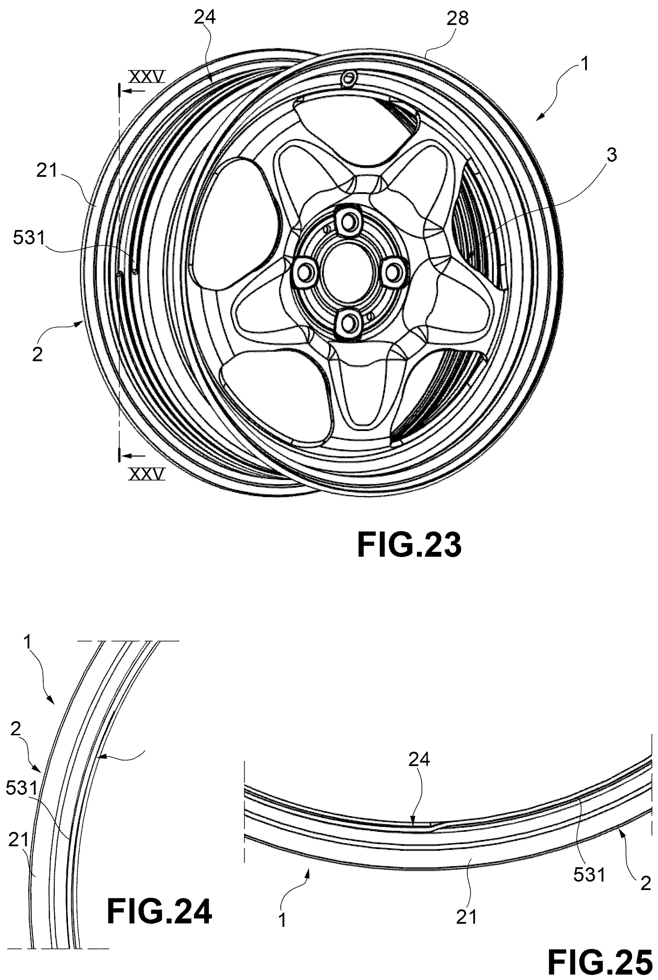

In figures 23 to 27 a seventh vehicle wheel according to the invention is shown. To elements corresponding to those of the previous embodiments the same reference numerals have been assigned. Such elements will not be further described.

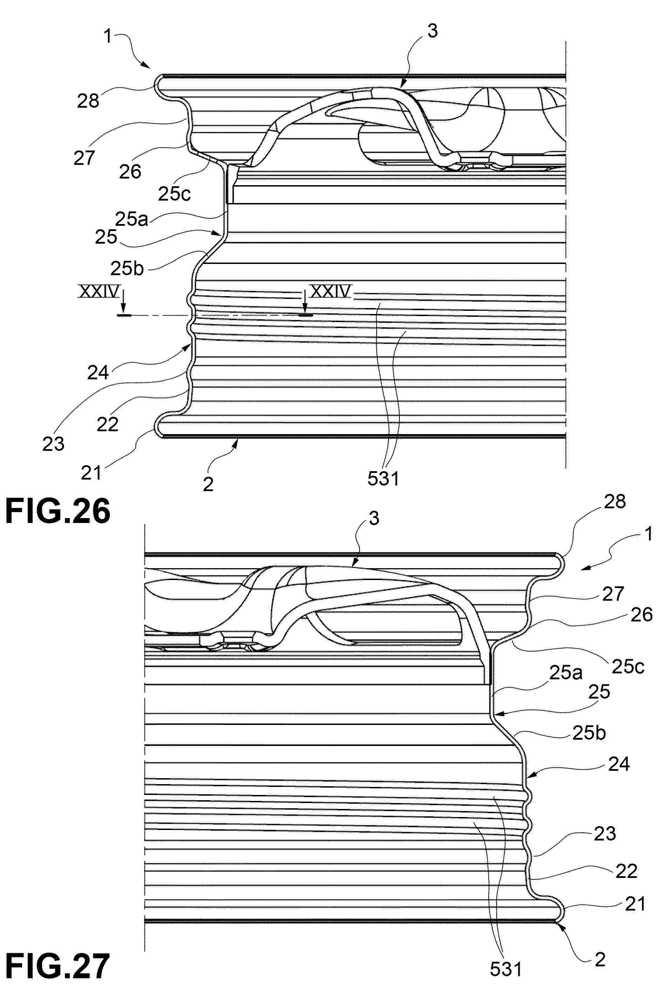

In the example of figures 23-27, the transition section 24 comprises a stiffening formation 531 in the form of a rib extending helically along the transition section 24 (and about the axis of the wheel). The stiffening formation 531 is obtained by plastic deformation processing. On the radially outer side of the rim, the stiffening formation 531 protrudes radially outwards with respect to an adjacent area of the transition section 24. On the radially inner side of the rim, the stiffening formation 531 is radially recessed with respect to the adjacent area of the transition section 24. The stiffening formation 531 has a wall thickness substantially equal to the wall thickness of the adjacent area of the transition section 24. In this way, it is obtained that the transition section 24 (which in the absence of the stiffening formation 531 would be rotationally symmetrical with respect to the axis of the wheel) has a radial sectional profile that varies along the circumferential direction of the wheel, as can be noted in particular in figures 26 and 27.

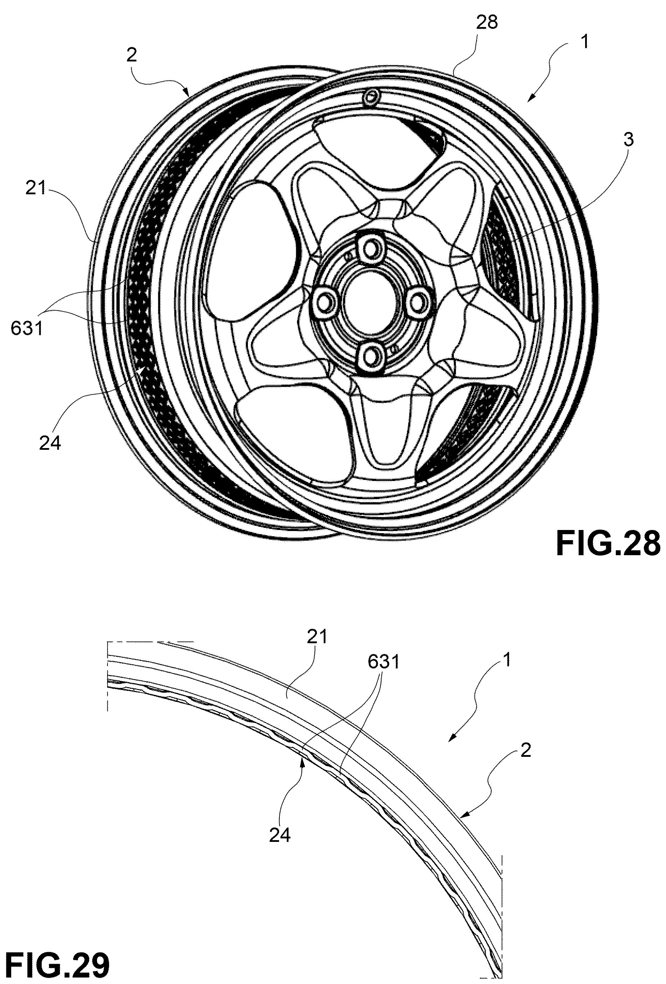

In figures 28 to 31 an eighth vehicle wheel according to the invention is shown. To elements corresponding to those of the previous embodiments the same reference numerals have been assigned. Such elements will not be further described.

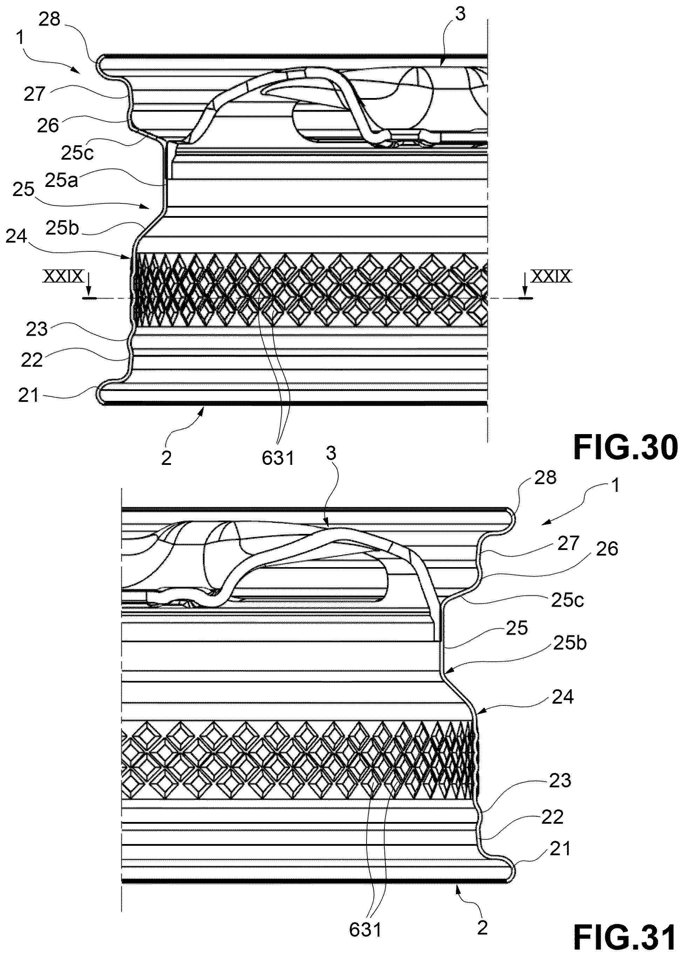

In the example of figures 28-31, the transition section 24 comprises a plurality of stiffening formations 631 regularly distributed on the transition section 24, in particular angularly equidistant along the circumferential direction of the transition section 24. The stiffening formations 631 are obtained by plastic deformation processing. In the example of figures 28-31, the stiffening formations 631 are rhombus-shaped bulges which, on the radially outer side of the rim, protrude radially outwards with respect to an adjacent area of the transition section 24. On the radially inner side of the rim, such stiffening formations 631 are radially recessed with respect to the adjacent area of the transition section 24. Said stiffening formations 631 have a wall thickness substantially equal to the wall thickness of the adjacent area of the transition section 24. The formations are distributed in a plurality of parallel rows extending along the circumferential direction of the transition section 24. The positions of the stiffening formations 631 along each row are angularly offset with respect to the positions of the stiffening formations 631 along the adjacent row(s). Furthermore, the stiffening formations 631 of each row are interdigitated with the stiffening formations 631 of the adjacent row(s). In this way, it is obtained that the transition section 24 (which in the absence of the stiffening formations 631 would be rotationally symmetrical with respect to the axis of the wheel) has a radial sectional profile that varies along the circumferential direction of the wheel, as can be noted in particular in figures 30 and 31.

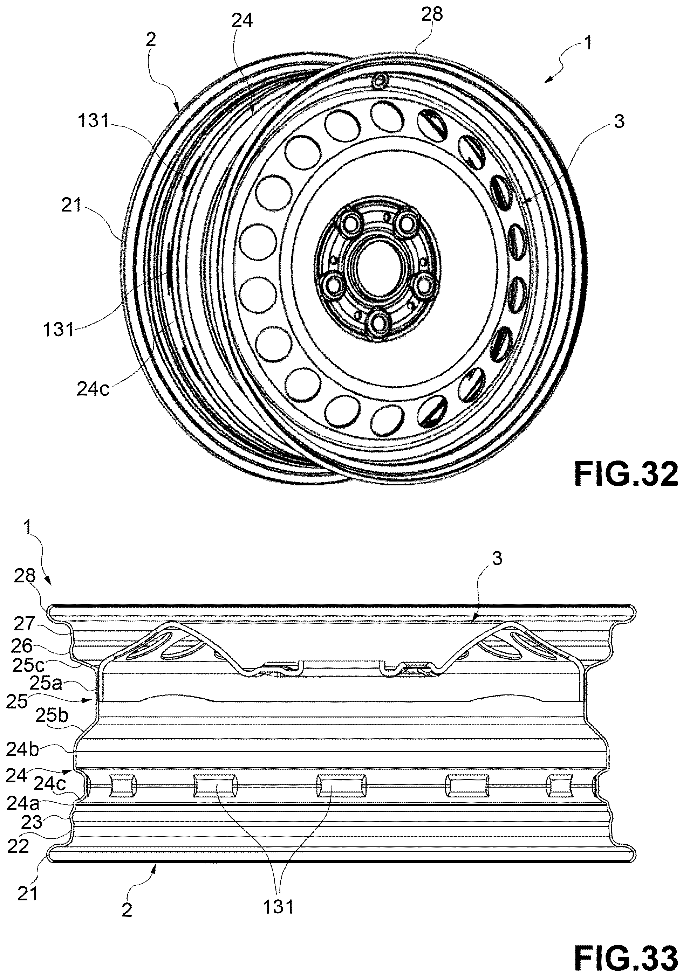

In figures 32 to 34 a ninth vehicle wheel according to the invention is shown. To elements corresponding to those of the previous embodiments the same reference numerals have been assigned. Such elements will not be further described.

The wheel of figures 32-34 has a plurality of stiffening formations 131 made as in the example of figures 4 - 7, but differs from the wheel of said example in that the disc 3 is a continuous disc, provided with a plurality of openings along its circumferential direction.

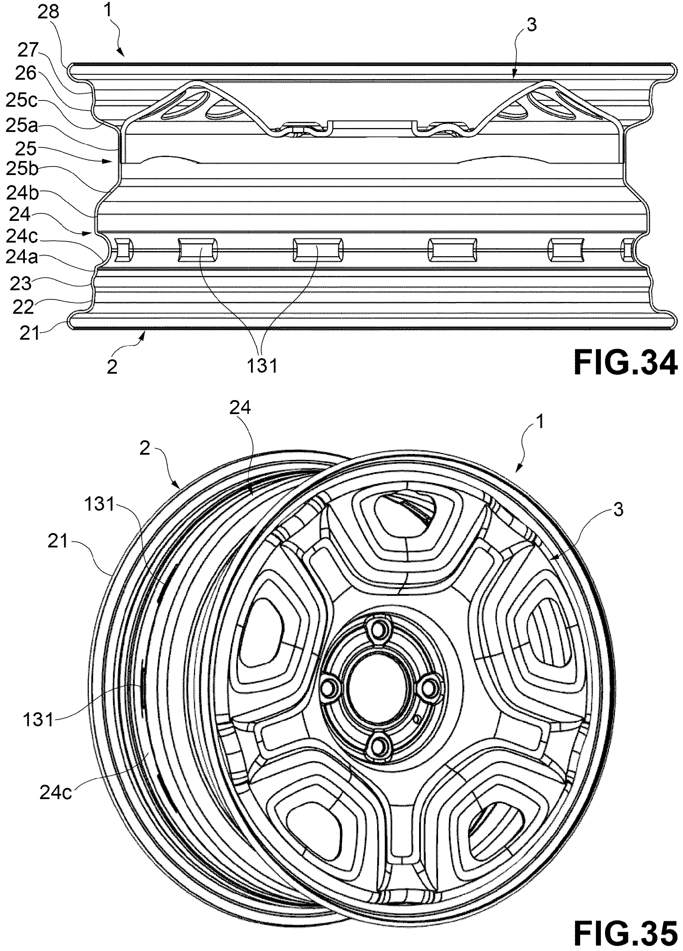

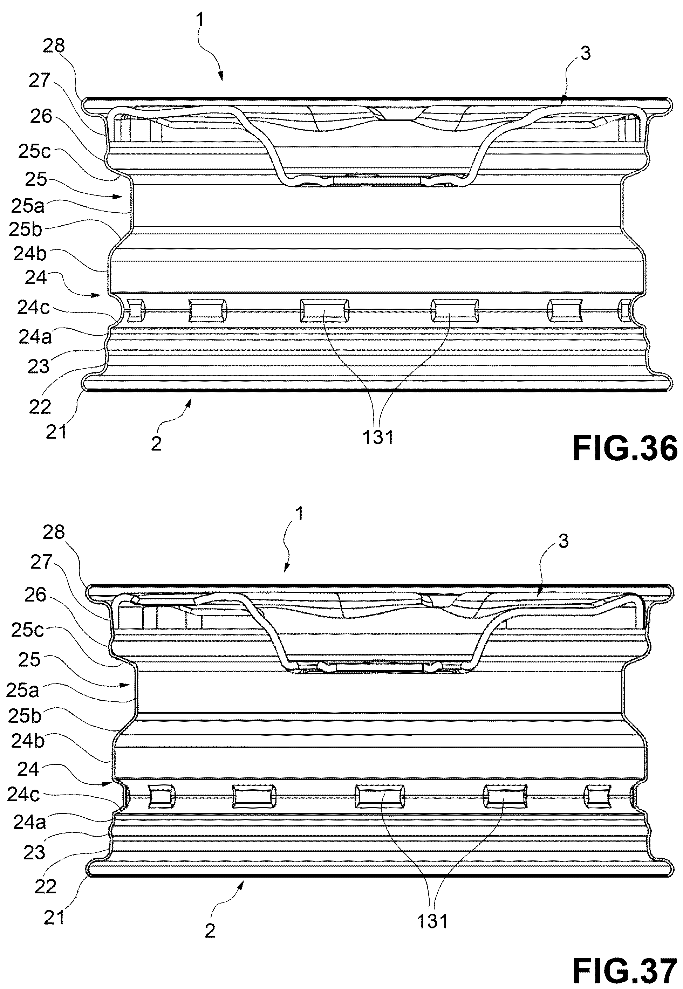

In figures 35 to 37 a tenth vehicle wheel according to the invention is shown. To elements corresponding to those of the previous embodiments the same reference numerals have been assigned. Such elements will not be further described.

The wheel of figures 35-37 has a plurality of stiffening formations 131 made as in the example of figures 35-37, but differs from the wheel of said example in that the disc 3 is of the semi-full-face type, and is fixed to a radially inner surface of the rim at the outer rim shoulder 27. However, the type of disc used is not essential for the purposes of the invention.

It is understood that elements described in one embodiment are combinable with elements described in other embodiments.

## Claims

1. Vehicle wheel rim, wherein the rim is made of metal sheet and comprises an inner rim flange (21), an outer rim flange (28), an inner rim shoulder (22), an outer rim shoulder (27), and a rim well (25) that includes a well base (25a), an inner well flank (25b), and an outer well flank (25c) and is interposed between the rim shoulders (21, 28), wherein the rim has a transition section (24) adjacent to the inner well flank (25b) and to an inner retaining hump (23) between the transition section (24) and the inner rim shoulder (22), said inner retaining hump (23) being rotationally symmetrical with respect to the axis of the wheel,
**characterized in that** the transition section (24) comprises at least one stiffening formation (31; 131; 231; 331; 431; 531; 631) arranged on the transition section (24), said at least one stiffening formation being, on a first radial side of the rim, radially protruding with respect to an adjacent area of the transition section (24) and, on a second radial side of the rim opposite to the first radial side, radially recessed with respect to the adjacent area of the transition section (24), said at least one stiffening formation having a wall thickness substantially equal to the wall thickness of the adjacent area of the transition section, such that the transition section (24) has a radial sectional profile that varies along the circumferential direction of the wheel, said radial profile being non-constant over the 360° of revolution of the transition section (24) about the axis of the wheel, and said transition section (24) having a non-circular profile according to a cross-sectional view, orthogonal to the axis of the wheel.

2. Vehicle wheel rim according to claim 1, comprising a plurality of said stiffening formations (31; 131; 231; 331; 431; 631) regularly distributed on the transition section (24).

3. Vehicle wheel rim according to claim 2, wherein the stiffening formations (231; 331; 431; 631) are angularly equidistant from each other along the circumferential direction of the transition section (24).

4. Vehicle wheel rim according to claim 3, wherein the stiffening formations (231) are connected to each other in such a way as to define a polygonal profile according to a cross-sectional view, orthogonal to the wheel axis.

5. Vehicle wheel rim according to claim 3, wherein the stiffening formations (331; 431; 631) are distributed in a plurality of parallel rows extending along the circumferential direction of the transition section (24).

6. Vehicle wheel rim according to claim 5, wherein the positions of the stiffening formations (331; 431; 631) along each row are angularly offset from the positions of the stiffening formations (331; 431; 631) along the adjacent row(s).

7. Vehicle wheel rim according to claim 6, wherein the stiffening formations (631) of each row are inter-digitated with the stiffening formations (631) of the adjacent row(s).

8. Vehicle wheel rim according to claim 6, wherein the positions of the stiffening formations (331) along each row are angularly aligned, according to the di-rection of the wheel axis, with the positions of the stiffening formations (331) along the adjacent row(s).

9. Vehicle wheel rim according to claim 1, wherein said at least one stiffening formation (531) is in the form of a rib extending helically along the transition section (24).

10. Vehicle wheel comprising a rim (2) according to any of the preceding claims, and a disc (3) attached to the rim (2).
